# EUROPÄISCHE PATENTSCHRIFT

(11) **EP 3 521 791 B1**
(45) Veröffentlichungstag und Bekanntmachung des Hinweises auf die Patenterteilung: **12.11.2025**
(21) Anmeldenummer: 18020404.2
(22) Anmeldetag: 22.08.2018
(51) Int. Cl.: G01M 13/02, G01M 13/027, G01M 17/06

(54) **LENKUNGSPRÜFSTAND**
STEERING TEST BENCH
BANC D'ESSAI DE DIRECTION

(30) Priorität: 06.02.2018 DE 102018102547
(43) Veröffentlichungstag der Anmeldung: 07.08.2019
(73) Patentinhaber: Dr. Ing. h.c. F. Porsche AG, 70435 Stuttgart (DE)
(72) Erfinder: Preising, Eric, 75233 Tiefenbronn (DE); Roming, Jan, 75242 Neuhausen (DE); Schrage, Benedikt, 75446 Iptingen (DE)

(56) Entgegenhaltungen:
- DE-A1- 19 622 687
- DE-C2- 19 622 687
- JP-A- S58 219 434
- JP-A- S62 225 923
- KR-B1- 100 897 270
- US-A- 4 672 844

## Beschreibung

Die Erfindung betrifft einen Lenkungsprüfstand.

Mit einem Lenkungsprüfstand können Teile einer Lenkung eines Kraftfahrzeugs geprüft werden. Ein Fahrwerk des Kraftfahrzeugs, in das die Lenkung verbaut werden soll, wird durch eine Ersatzmechanik, wie beispielsweise Ersatzspurstangen, simuliert, die die reale Geometrie des Fahrwerks abbilden. Der Lenkungsprüfstand simuliert damit möglichst genau die reale Fahrwerkskinematik. Damit wird eine Beanspruchung der Teile der Lenkung, wie beispielsweise Lenkgetriebe und Lager, unter möglichst realen kinematischen Bedingungen getestet. Wünschenswert ist dabei eine Prüfung in einer Querrichtung, d.h. entlang des Verlaufs einer Spurstange der Lenkung, und unter realer Fahrwerkskinematik beim Ein- und Ausfedern, d.h. in einer Vertikalrichtung senkrecht zur Querrichtung.

Aus DE 102005057983A1 und CN 2684177 Y sind Vorrichtungen bekannt, in der weder in Querrichtung noch in Vertikalrichtung simuliert wird.

CN 200941083 Y, CN 101975668 A, CN 1877284 A offenbaren Vorrichtungen mit denen in Querrichtung und in Vertikalrichtung simuliert wird. Es ist allerdings wünschenswert gegenüber dem dort verfolgten Lösungsansatz eine Vorrichtung mit höherer Genauigkeit der Simulationsgüte insbesondere bezüglich der Achskinematik in Querrichtung und in Vertikalrichtung bereitzustellen.

DE 196 22 687 A1, US 4 672 844 A, JP S58 219434 A, JP S62 225923 A und KR 100 897 2780 B1 offenbaren weitere Aspekte derartiger Vorrichtungen. DE 196 22 687 A1 offenbart einen Prüfstand für ein Lenkungssystem mit einer Belastungseinrichtung zum Beaufschlagen des Lenkungssystems mit einer Belastung in einer Richtung, in welcher eine Lenkgegenkraft wirkt, und eine Belastungseinrichtung zum Beaufschlagen des Lenkungssystems mit einer Belastung in einer Richtung, in welcher eine Straßenoberflächengegenkraft wirkt.

Diese Aufgabe wird durch den Lenkungsprüfstand nach Anspruch 1 gelöst. Dieser umfasst wenigstens ein Grundplatte, die sich in einer Längsrichtung und in einer Querrichtung erstreckt, wenigstens einen Ersatzquerlenker, der an einem ersten Ende des Ersatzquerlenkers mittels wenigstens eines Befestigungselements an der wenigstens einen Grundplatte um eine erste Längsachse drehbar verbindbar ist, wobei sich die erste Längsachse in der Längsrichtung erstreckt, wenigstens einen Ersatzradträger zur Verbindung des Lenkungsprüfstands mit einer Lenkgetriebespurstange einer zu prüfenden Lenkung, wobei der Ersatzradträger an einem ersten Ende des Ersatzradträgers mittels wenigstens eines Anschlussteils mit einem zweiten Ende des Ersatzquerlenkers um eine zweite Längsachse drehbar verbindbar ist, wobei sich die zweite Längsachse in der Längsrichtung erstreckt, wobei wenigstens ein Antrieb über wenigstens einen Umlenkhebel eine Kraft erzeugt, die auf den Ersatzradträger in einer Vertikalrichtung einwirkt, wobei die Vertikalrichtung zur Längsrichtung und zur Querrichtung senkrecht ist. Dadurch wird die Kinematik in der Querrichtung und in der Vertikalrichtung besonders präzise simuliert.

Erfindungsgemäß umfasst der Lenkungsprüfstand wenigstens einen ersten Ersatzquerlenker der an seinem ersten Ende mittels wenigstens eines ersten Befestigungselements mit einer ersten Grundplatte um die erste Längsachse drehbar verbindbar ist, wenigstens einen zweiten Ersatzquerlenker der an seinem ersten Ende mittels wenigstens eines zweiten Befestigungselements mit einer zweiten Grundplatte um eine dritte Längsachse drehbar verbindbar ist, wobei sich die dritte Längsachse in Längsrichtung erstreckt, wobei die erste Grundplatte und die zweite Grundplatte voneinander in der Vertikalrichtung beabstandet sind, und wobei der wenigsten eine erste Ersatzquerlenker an seinem zweiten Ende mittels wenigstens eines ersten Anschlussteils mit dem ersten Ende des Ersatzradträgers um die zweite Längsachse drehbar verbindbar ist, und wobei der wenigsten eine zweite Ersatzquerlenker an seinem zweiten Ende mittels wenigstens eines zweiten Anschlussteils mit einem zweiten Ende des Ersatzradträgers um eine vierte Längsachse drehbar verbindbar ist. Dies erhöht die Genauigkeit der Simulation weiter.

Vorzugsweise umfasst der Lenkungsprüfstand wenigstens ein erstes Verbindungselement und wenigstens ein zweites Verbindungselement, wobei das erste Verbindungselement an der ersten Grundplatte angeordnet ist und sich in einer ersten Richtung zwischen der ersten Grundplatte und der zweiten Grundplatte erstreckt, wobei das zweite Verbindungselement an der zweiten Grundplatte angeordnet ist und sich zwischen der ersten Grundplatte und der zweiten Grundplatte in der ersten Richtung erstreckt, wobei das erste Verbindungselement wenigstens ein erstes Langloch aufweist, das sich in der ersten Richtung erstreckt, wobei das zweite Verbindungselement wenigstens ein erstes Befestigungsmittel aufweist, wobei das erste Verbindungselement und das zweite Verbindungselement mit dem ersten Befestigungsmittel, das durch das wenigsten eine erste Langloch führbar ist, zur Wahl eines Abstandes zwischen der ersten Grundplatte und der zweiten Grundplatte verbindbar sind. Die erste Grundplatte, die zweite Grundplatte, das erste Verbindungselement und das zweite Verbindungselement bilden ein Grundgerüst des Lenkungsprüfstands. Über den Abstand zwischen den Grundplatten, und damit über den Abstand zwischen den Ersatzquerlenkern, werden weitere Eigenschaften des Fahrwerks einstellbar.

Erfindungsgemäß ist der wenigstens eine Ersatzquerlenker als Doppelquerlenker ausgebildet. Dadurch wird eine Ersatzkinematik vereinfacht abgebildet.

Erfindungsgemäß erstreckt sich die erste Grundplatte in der Querrichtung von einer ersten Längskante zu einer zweiten Längskante, wobei ein erster Doppelquerlenker an zwei ersten Anschlussteilen an der ersten Grundplatte angeordnet ist und die erste Grundplatte an der ersten Längskante in der Querrichtung überragt, wobei sich die zweite Grundplatte in der Querrichtung von einer dritten Längskante zu einer vierten Längskante erstreckt, wobei ein zweiter Doppelquerlenker an zwei zweiten Anschlussteilen an der zweiten Grundplatte angeordnet ist und die zweite Grundplatte an der dritten Längskante in der Querrichtung überragt. Dadurch ist eine besonders präzise Simulation einer Seite einer gelenkten Achse eines Fahrwerks möglich.

Vorzugsweise umfasst der Lenkungsprüfstand einen dritten Doppelquerlenker, der an zwei dritten Anschlussteilen an der ersten Grundplatte angeordnet ist und die erste Grundplatte an der zweiten Längskante in der Querrichtung überragt, wobei ein vierter Doppelquerlenker an zwei vierten Anschlussteilen an der zweiten Grundplatte angeordnet ist und die zweite Grundplatte an der vierten Längskante in der Querrichtung überragt, wobei der erste Doppelquerlenker und der zweite Doppelquerlenker einen ersten Ersatzradträger zur Verbindung mit einer ersten Seite der Lenkgetriebespurstange trägt, und wobei der dritte Doppelquerlenker und der vierte Doppelquerlenker einen zweiten Ersatzradträger zur Verbindung mit einer zweiten Seite der Lenkgetriebespurstange trägt. Dadurch werden beide Seiten einer gelenkten Achse des Fahrwerks simulierbar.

Vorzugsweise umfasst der wenigstens eine Ersatzquerlenker wenigstens einen Schenkel, der sich zwischen zwei Enden des Ersatzquerlenkers erstreckt, wobei der Schenkel einen sich zwischen den zwei Enden erstreckenden Gewindestangenabschnitt und eine sich zwischen den zwei Enden erstreckende Aufnahme für den Gewindestangenabschnitt umfasst, wobei eine Länge des wenigstens einen Schenkels durch Einbringen zumindest eines Teils des Gewindestangenabschnitts in die Aufnahme einstellbar ist. Dadurch kann dieses Bauteil für verschiedene Kinematik-Modelle verwendet werden.

Vorzugsweise umfasst die wenigstens eine Grundplatte eine Vielzahl von Lochabschnitten zur wahlweisen Befestigung wenigstens eines Befestigungselements an der Grundplatte.

Vorzugsweise umfasst der wenigstens eine Ersatzradträger eine erste Schiene, die sich zwischen zwei Enden des Ersatzradträgers in einer zweiten Richtung erstreckt, mit wenigstens einem zweiten Langloch, das sich in der zweiten Richtung erstreckt, und eine zweite Schiene, die sich zwischen den zwei Enden des Ersatzradträgers in der zweiten Richtung erstreckt, mit wenigstens einem dritten Langloch, das sich in der zweiten Richtung erstreckt, und wobei die erste Schiene und die zweite Schiene mit einem zweiten Befestigungsmittel, das durch das wenigsten eine zweite Langloch und durch das wenigsten eine dritte Langloch führbar ist, in einer in der zweiten Richtung einstellbarer Länge verbindbar sind. Die zwei Schienen ermöglichen die Simulation mit einstellbarer Länge eines Radträgers, der durch die beiden Schienen simuliert wird.

Vorzugsweise umfasst der wenigstens eine Ersatzradträger eine dritte Schiene, die sich in einer dritten Richtung, senkrecht zur zweiten Richtung erstreckt, mit wenigstens einem vierten Langloch, das sich in der dritten Richtung erstreckt, wobei die dritte Schiene ein drittes Anschlussteil aufweist, zur Verbindung des Lenkungsprüfstands mit der Lenkgetriebespurstange, wobei die zweite Schiene und die dritte Schiene mit einem dritten Befestigungsmittel, das durch das wenigsten eine dritte Langloch und durch das wenigsten eine vierte Langloch führbar ist, verbindbar sind, und wobei ein Abstand zwischen drittem Anschlussteil und zweiter Schiene in der dritten Richtung einstellbar ist. Dies ermöglicht die Simulation für einstellbare Länge eines Spurhebels, der durch die dritte Schiene simuliert wird.

Vorzugsweise umfasst der Lenkungsprüfstand ein Steuergerät zur Ansteuerung des wenigstens einen Antriebs, die ausgebildet ist eine Ersatzkinematik für eine Lenkgetriebespurstange in Querrichtung und in Vertikalrichtung vorzugeben.

Weitere vorteilhafte Ausgestaltungen ergeben sich aus den Unteransprüche, der folgenden Beschreibung und der Zeichnung. In der Zeichnung zeigt
Fig. 1 schematisch eine Vorderansicht eines schematisch dargestellten Lenkungsprüfstands,
Fig. 2 schematisch eine Aufsicht des schematisch dargestellten Lenkungsprüfstands,
Fig. 3 perspektivisch, einen Ersatzradträger,
Fig. 4 perspektivisch, Teile eines Grundgerüsts,
Fig. 5 perspektivisch, Teile eines Grundgerüsts,
Fig. 6 perspektivisch, einen Umlenkhebel.

In der folgenden Beschreibung sind Elemente mit gleicher oder vergleichbarer Funktion mit denselben Bezugszeichen bezeichnet.

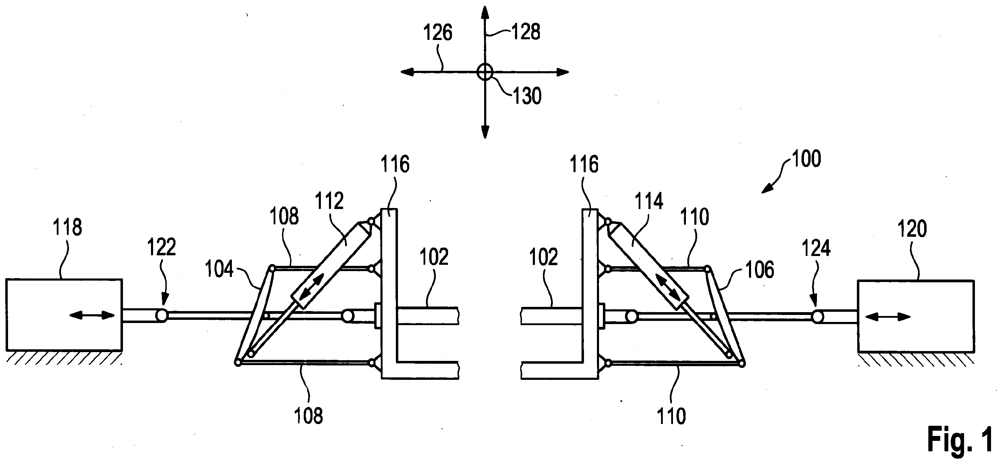

Fig. 1 zeigt schematisch eine Vorderansicht eines schematisch dargestellten Lenkungsprüfstands 100.

Der Lenkungsprüfstand 100 dient der Aufnahme einer sich in einer Querrichtung 126 erstreckenden Lenkgetriebespurstange 102 einer zu prüfenden Lenkung.

Der Lenkungsprüfstand 100 umfasst einen ersten Ersatzradträger 104 und einen zweiten Ersatzradträger 106, die auf einander gegenüberliegenden Seiten der Lenkgetriebespurstange 102 mit dieser lösbar verbunden sind.

Der Lenkungsprüfstand 100 umfasst zwei erste Ersatzquerlenker 108, die als Doppelquerlenker ausgeführt und mit dem ersten Ersatzradträger 104 verbunden sind. Der Lenkungsprüfstand umfasst zwei zweite Ersatzquerlenker 110, die als Doppelquerlenker ausgeführt und mit dem zweiten Ersatzradträger 106 verbunden sind. Derart nachgebaute Achsen werden vorzugsweise unabhängig davon verwendet, ob das reale Fahrzeug mit Doppelquerlenker-Achsen oder McPherson Achsen ausgerüstet ist.

Optional ist am Lenkungsprüfstand 100 ein erster Stoßdämpfer 112 mit dem ersten Ersatzradträger 104 verbunden und ein zweiter Stoßdämpfer 114 mit dem zweiten Ersatzradträger 106 verbunden.

Die Doppelquerlenker 108, 110 und die optionalen Stoßdämpfer 112, 114 sind mit einem Grundgerüst 116 des Lenkungsprüfstands verbunden.

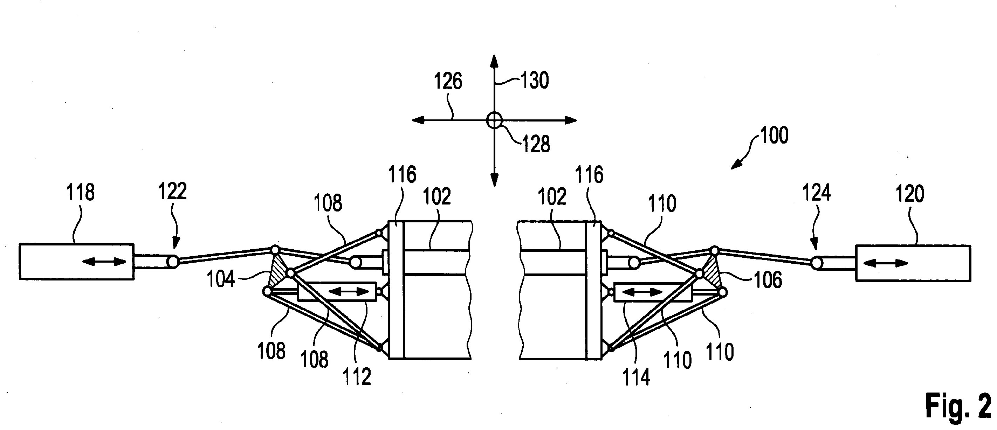

Fig. 2 zeigt schematisch eine Aufsicht des schematisch dargestellten Lenkungsprüfstands 100.

Das Grundgerüst 116 umfasst eine Grundplatte, die sich in einer Längsrichtung 130 senkrecht zur Querrichtung 126 und in der Querrichtung 126 erstreckt. Die Ersatzquerlenker 108, 110 sind an einem ersten Ende mittels Befestigungselementen an der Grundplatte um eine erste Längsachse drehbar verbunden, wobei sich die erste Längsachse in der Längsrichtung 130 erstreckt. Die Ersatzradträger 104, 106 sind an einem ersten Ende mittels Anschlussteils mit einem zweiten Ende jeweiliger Ersatzquerlenker 108, 110 um eine zweite Längsachse drehbar verbunden, wobei sich die zweite Längsachse in der Längsrichtung 130 erstreckt.

Der Lenkungsprüfstand 100 umfasst einen ersten Antriebe 118 und einen zweiten Antrieb 120, insbesondere Linear-Aktoren, die auf einander in der Querrichtung 126 gegenüberliegenden Seiten der Lenkgetriebespurstange 102 am Lenkungsprüfstand 100 angeordnet sind. Der erste Antrieb 118 erzeugt über einen ersten Umlenkhebel 122 eine erste Kraft, die auf den ersten Ersatzradträger 104 in einer Vertikalrichtung 128 einwirkt, wobei die Vertikalrichtung 128 zur Längsrichtung 130 und zur Querrichtung 126 senkrecht ist. Der zweite Antrieb 120 erzeugt über einen zweiten Umlenkhebel 124 eine zweite Kraft, die auf den zweiten Ersatzradträger 106 in der Vertikalrichtung 128 einwirkt.

Das Grundgerüst 116, die Antriebe 118, 120 und die Umlenkhebels 122, 124 sind beispielsweise auf einer Bodenplatte des Lenkungsprüfstands 100 angeordnet.

Über ein Steuergerät wird mittels der Antriebe 118, 120 ein Ersatzkinematik für die Lenkgetriebespurstange 102 in Querrichtung 126 und in Vertikalrichtung 128 vorgegeben. Durch diese Anordnung wird die Kinematik in der Querrichtung 126 und in der Vertikalrichtung 128 besonders präzise simulierbar. Durch einen somit geänderten Winkel der Lenkgetriebespurstange 102 wirken die Kräfte in einem anderen Winkel auf ein Lenkgetriebe. Dies wiederum beeinflusst die Reibungskräfte von Lagern im Lenkgetriebe.

Um die Kinematik zur Prüfung der Lenkung, insbesondere des Lenkgetriebes, möglichst genau zu simulieren, werden die beschriebenen Komponenten bezüglich ihrer Geometrie so ausgebildet und angeordnet, dass diese bezüglich des kinematischen Verhaltens möglichst genau mit der tatsächlich eingesetzten Komponenten übereinstimmten. Dazu wird ein Kinematik-Modell verwendet, das mittels eines CAD Model durch eine Kinematik-Erweiterung Anbindungspunkte bestimmt an denen die beschriebenen Komponenten miteinander verbunden werden. Zudem werden für eine Nachbildung der Kinematik eine Länge der eingesetzten Komponenten und deren Winkel zueinander eingestellt.

Details der Konstruktion eines beispielhaften Lenkungsprüfstands 100, der diese Funktion ermöglicht, werden im Folgenden beschrieben.

Dabei werden außer Schrauben, Muttern, Unterlegscheiben usw. beispielsweise folgende Normteile verwendet:
- Gabelkopf, DIN 71752 mit Außengewinde, Größe 8x16 (M8)
   Verwendung: Bei den Ersatzquerlenkern 108, 110, um einen vorderen mit einem hinteren Ersatzquerlenkerstab zu verbinden,
- Gelenkkopf, DIN 12240-4 mit Außengewinde, Größe M8
   Verwendung: Bei den Ersatzquerlenkern 108, 110, zur Anbindung der Ersatzquerlenker 108, 110 an den Lenkungsprüfstand 100,
- Winkelgelenk, DIN 71802, Größe M8
   Verwendung: Bei den Ersatzquerlenkern 108, 110, zur Anbindung der Ersatzquerlenker 108, 110 an die Ersatzradträger 104, 106,
- Gelenkkopf, DIN 12240-4 mit Außengewinde, Größe M14
   Verwendung: Zur Anbindung der Ersatzradträger 104, 106 an die Antriebe 118, 120 des Lenkungsprüfstands 100,
- Wellenbock, GW-1 Serie 1, Durchmesser 30mm
   Verwendung: Bei der Umlenkung, zur Aufnahme der Achse,
- Nadellager, mit Ringen, ohne Innenring, NKS 30
   Verwendung: Bei der Umlenkung, Lagerung der Welle,
- Passschrauben, ISO 7379, diverse Größen

Verwendung: Bei den Ersatzquerlenkern 108, 110 und den Umlenkhebeln 122, 124.

Die Konstruktion ist beispielsweise aus verschiedenen Metallplatten aufgebaut, welche über Zylinderkopfschrauben und Passstifte gefügt werden. Die Adaptionen welche zur Anbindung der Ersatzquerlenker 108, 110 dienen, sowie der Verbindung zwischen Ersatzquerlenker 108, 110 und Ersatzradträger 104, 106 und die Anbindung der Lenkgetriebespurstange 102, werden für jedes Kinematik-Modell neu erstellt.

Die Ersatzquerlenker 108, 110 bestehen aus vier grundlegenden Baugruppen: Der Innenseite, welche vorzugsweise vorne und hinten gleich ist, der Außenseite mit dem Gabelkopf und der Außenseite mit der Anbindung an den Ersatzradträger. Diese Baugruppe unterscheidet sich von oben zu unten, da unten noch eine Schubstange für die Hubbewegung angebunden wird.

Diese Baugruppen lassen sich über verschieden lange Gewindestangen verbinden und einstellen. Hierbei sorgt die Kombination aus einem Links- und Rechtsgewinde für eine stufenlose Einstellung der Gewindestangen. Für besonders kurze Einstellungen können verkürzte Gewindehülsen verwendet werden. Ein Gewindestangenabschnitt und eine Aufnahme für den Gewindestangenabschnitt sind beispielsweise als Links- und Rechtsgewinde realisiert. Es kann auch eine Gewindehülse als Aufnahme für den Gewindestangenabschnitt vorgesehen sein.

Die Adaptionen, d.h. die im Folgenden beschriebenen Verbindungselemente, Anschlussteile oder Befestigungselemente, beispielsweise zur Anbindung der Ersatzquerlenker 108, 110 werden möglichst einfach gehalten um den Fertigungsaufwand nicht unnötig hoch ausfallen zu lassen.

Eine Adaption nimmt beispielsweise einen Gelenkkopf auf und kann einen Kegel umfassten, der zwischen die Adaption und den Gelenkkopf gelegt wird. Dadurch kann ein Schwenkwinkel der Gelenkköpfe voll genutzt werden.

Die Adaptionen welche die Ersatzquerlenker 108, 110 mit dem Ersatzradträger 104, 106 verbinden unterscheiden sich im Beispiel in einem Winkel welchen die Fläche hat an welche ein Winkelgelenk, das die Adaption bildet, geschraubt wird.

Die Adaption zur Anbindung der Lenkgetriebespurstange 102 wird in ihrem Winkel und ihrer Position für entsprechende Bohrungen angepasst. Eine Hülse, welche einen Kegel der Lenkgetriebespurstange 102 aufnimmt, wird an diesen Kegel angepasst.

Die Richtungen sind im Folgenden bezüglich Grundplatten definiert, die sich in einer Längsrichtung und in einer Querrichtung erstrecken. Die Grundplatten sind in einer ersten Richtung, beispielsweise in der Vertikalrichtung 128, voneinander beabstandet. Über ein Verbindungselement mit wenigstens einem ersten Befestigungsmittel und einem ersten Langloch kann ein Abstand zwischen den Grundplatten eingestellt werden. Die Ersatzquerlenker 108, 110 sind an einem ersten Ende des jeweiligen Ersatzquerlenkers 108, 110 mittels entsprechender Adaptionen an der jeweiligen Grundplatte um eine erste Längsachse drehbar verbunden. Die erste Längsachse erstreckt sich in der Längsrichtung.

Die Ersatzradträger 104, 106 sind an einem ersten Ende mittels entsprechender Adaption mit einem zweiten Ende des Ersatzquerlenkers 108, 110 um eine zweite Längsachse drehbar verbunden. Die zweite Längsachse erstreckt sich in der Längsrichtung 130.

Die Antriebe 118, 120 erzeugen über die jeweiligen Umlenkhebel 122, 124 eine Kraft, die auf den jeweiligen Ersatzradträger 104, 106 in einer Vertikalrichtung 128 einwirkt, wobei die Vertikalrichtung 128 zur Längsrichtung 130 und zur Querrichtung 126 senkrecht ist.

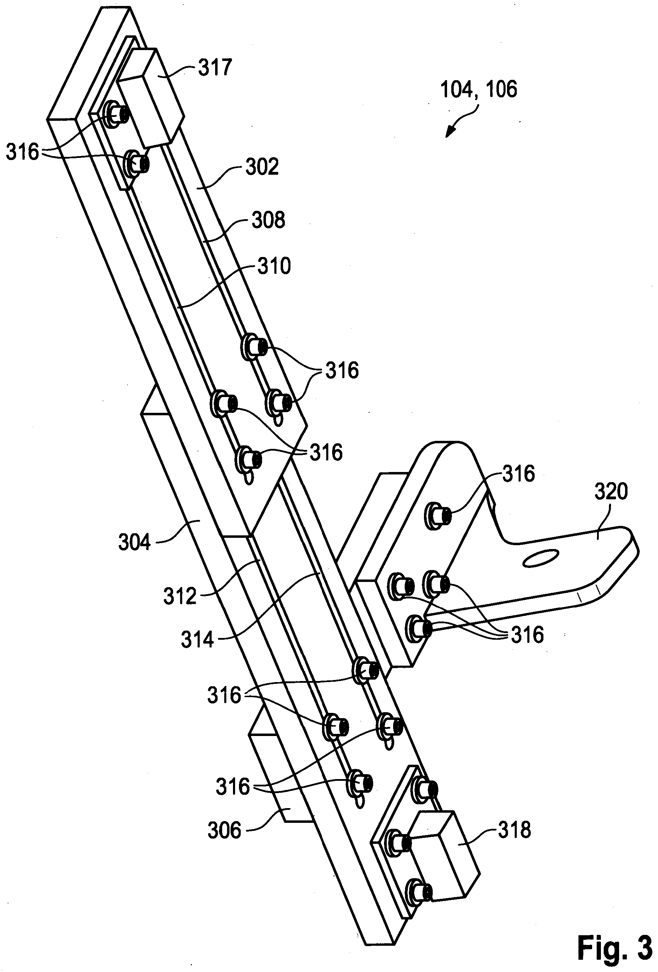

Fig. 3 zeigt perspektivisch, einen Ersatzradträger 104, 106.

Die Ersatzradträger 104, 106 bestehen aus im Beispiel aus drei Metallplatten, die im Folgenden auch als Schienen bezeichnet werden. Zwei dieser Platten lassen sich über Langlöcher so zueinander ausrichten, dass die verschiedenen Größen der zu simulierenden Radträger erzeugt werden können. Die dritte Platte lässt sich ebenfalls über Langlöcher variabel positionieren und dient zur Anbindung der Lenkgetriebespurstange 102 an die Ersatzradträger 104, 106. Die Adaptionen zur Anbindung der Ersatzquerlenker 108, 110 und der Lenkgetriebespurstange 102 werden im Beispiel über jeweils vier Zylinderkopfschrauben an den Ersatzradträgern 108, 110 befestigt.

Der Ersatzradträger 104, 106 umfasst eine erste Schiene 302, die sich zwischen zwei Enden des Ersatzradträgers 104, 106 in einer zweiten Richtung erstreckt. Die erste Schiene 302 umfasst zwei zweite Langlöcher 308, 310 die sich parallel zueinander in der zweiten Richtung erstrecken.

Der Ersatzradträger 104, 106 umfasst eine zweite Schiene 304, die sich zwischen den zwei Enden des Ersatzradträgers 104, 106 in der zweiten Richtung erstreckt. Die zweite Schiene 304 umfasst zwei dritte Langlöcher 312, 314, die sich parallel zueinander in der zweiten Richtung erstrecken.

Die erste Schiene 302 und die zweite Schiene 304 sind mit einem zweiten Befestigungsmittel 316 miteinander verbunden. Im Beispiel sind jeweils zwei Passstifte an zwei voneinander in der zweiten Richtung beabstandeten Stellen durch eines der zweiten Langlöcher 308, 310 und durch eines der dritten Langlöcher 312, 314 geführt. Dadurch sind die Schienen 302, 304 in einer in der zweiten Richtung einstellbarer Länge verbindbar. Die zwei Schienen 302, 304 ermöglichen die Simulation mit einstellbarer Länge eines Radträgers, der durch die beiden Schienen 302, 304 simuliert wird.

Der Ersatzradträger 104, 106 ist an seinem ersten Ende mittels eines ersten Anschlussteils 317 am ersten Ende eines ersten Ersatzquerlenkers und an seinem in zweiter Richtung gegenüberliegenden zweiten Ende mittels eines zweiten Anschlussteils 318 am ersten Ende eines zweiten Ersatzquerlenkers drehbar verbindbar.

Der Ersatzradträger 104, 106 umfasst eine dritte Schiene 306, die sich in einer dritten Richtung, senkrecht zur zweiten Richtung erstreckt. Die dritte Schiene 306 umfasst zwei vierte Langlöcher, die sich in der dritten Richtung erstrecken. Die dritte Schiene 306 weist ein drittes Anschlussteil auf, zur Verbindung des Lenkungsprüfstands mit der Lenkgetriebespurstange 102, wobei die zweite Schiene 304 und die dritte Schiene 306 mit einem dritten Befestigungsmittel 316 verbunden sind. Das dritte Befestigungsmittel sind beispielsweise jeweils zwei Passstifte, die an zwei voneinander in der ersten Richtung beabstandeten Stellen durch eines der dritten Langlöcher 312, 314 und durch eines der vierten Langlöcher geführt sind. Dadurch ist ein Abstand zwischen drittem Anschlussteil 320 und zweiter Schiene 304 in der dritten Richtung einstellbar. Dies ermöglicht die Simulation für einstellbare Länge eines Spurhebels, der durch die dritte Schiene simuliert wird.

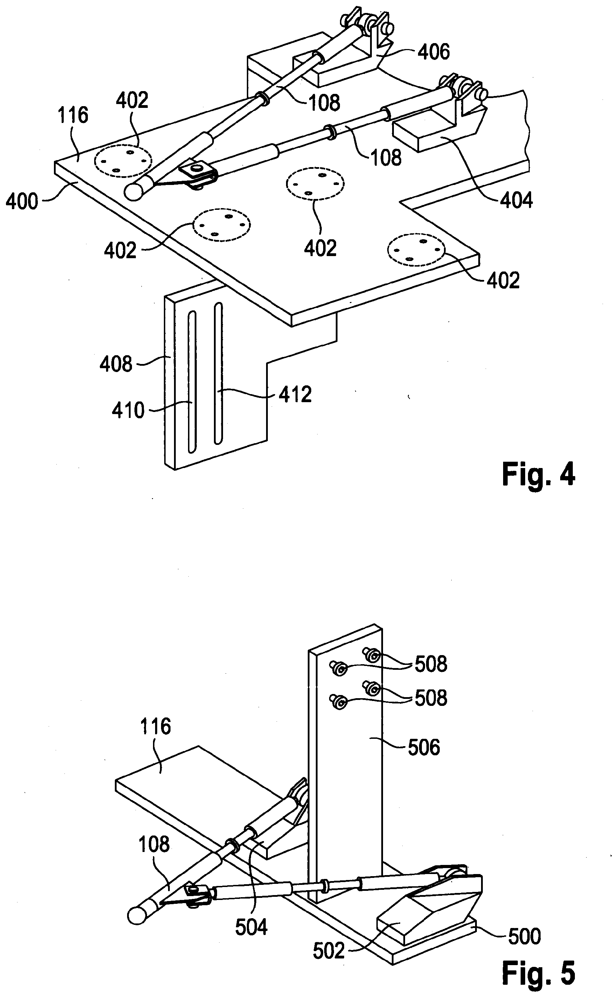

Fig. 4 zeigt perspektivisch Teile des Grundgerüsts 116. Eine erste Grundplatte 400 erstreckt sich in der Querrichtung 126 und in der Längsrichtung 130. Die erste Grundplatte 400 weist eine Vielzahl von Lochabschnitten 402 auf, zur wahlweisen Befestigung oder Positionierung von Befestigungselementen 404, 406 für Ersatzquerlenker. Im Beispiel ist der erste Ersatzquerlenker 108 in seiner Ausführung als Doppelquerlenker dargestellt.

Fig. 5 zeigt perspektivisch weitere Teile des Grundgerüsts 116. Eine zweite Grundplatte 500 erstreckt sich in der Querrichtung 126 und in der Längsrichtung 130. Die zweite Grundplatte weist ein drittes Befestigungselements 502 und ein viertes Befestigungselement 504 für Ersatzquerlenker auf. Im Beispiel ist der erste Ersatzquerlenker 108 in seiner Ausführung als Doppelquerlenker dargestellt.

Ein erstes Verbindungselement 408 und ein zweites Verbindungselement 506 sind zur Verbindung der ersten Grundplatte 400 und der zweiten Grundplatte 500 vorgesehen.

Das erste Verbindungselement 408 ist an der ersten Grundplatte 400 angeordnet und erstreckt sich in der ersten Richtung zwischen der ersten Grundplatte 400 und der zweiten Grundplatte 500. Das zweite Verbindungselement 506 ist an der zweiten Grundplatte 500 angeordnet und erstreckt sich zwischen der ersten Grundplatte 400 und der zweiten Grundplatte 500 in der ersten Richtung.

Das erste Verbindungselement 408 weist zwei erste Langlöcher 410, 412 auf, die sich parallel zueinander in der ersten Richtung erstrecken.

Das zweite Verbindungselement 506 weist ein erstes Befestigungsmittel 508, im Beispiel vier Passstifte auf, die paarweise durch jeweils eines der ersten Langlöcher führbar sind. Das zweite Verbindungselement 506 kann auch zwei fünfte Langlöcher aufweisen, die sich parallel zueinander in der ersten Richtung erstrecken und wie zuvor beschrieben mit Passstifte verbindbar sind.

Das erste Verbindungselement 408 und das zweite Verbindungselement 506 sind mit einem ersten Befestigungsmittel 508 verbunden. Das erste Befestigungsmittel 508, ermöglicht eine Wahl eines Abstandes zwischen der ersten Grundplatte 400 und der zweiten Grundplatte 500.

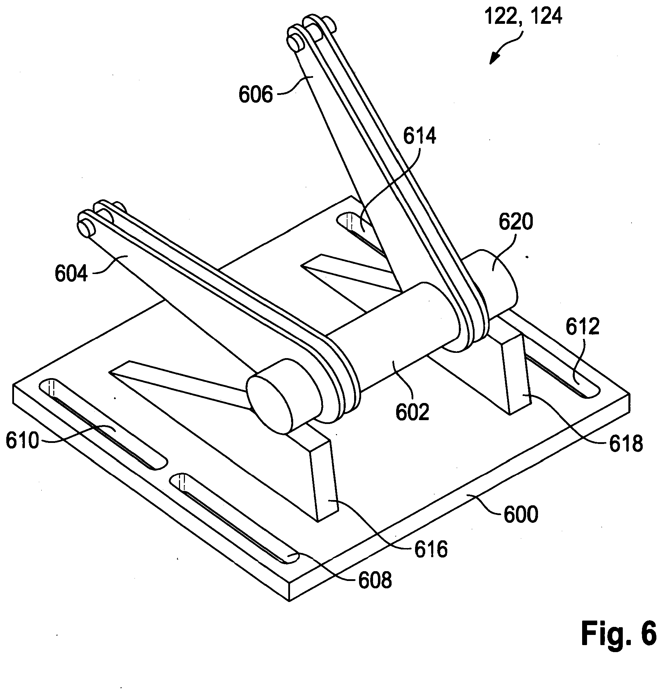

Fig. 6 zeigt perspektivisch, einen Umlenkhebel 122, 124, zur Umlenkung einer Linearbewegung von den Antrieben 118, 120.

Der Umlenkhebel 122, 124 weist eine dritte Grundplatte 600 auf, an der ein erster Wellenbock 616 und ein zweiter Wellenbock 618 angeordnet sind, die eine vorzugsweise gehärtete Welle 620 tragen. Die Welle 620 ist mittels Nadellager 602 gelagert, die vorzugsweise ohne Innenring direkt auf der Achse laufen. Die Welle 620 weist einen ersten Hebel 604 und einen zweiten Hebel 606 auf. Hebelarme der Hebel 604, 606 lassen sich über verschiedene Bohrungen in verschiedenen Winkeln auf der Welle 620 positionieren.

Ein sechstes Langloch 608 und ein siebtes Langloch 610 erstrecken sich entlang einer Seite der dritten Grundplatte 600. Ein achtes Langloch 612 und ein neuntes Langloch 612 erstrecken sich entlang einer dieser gegenüberliegenden Seite der dritten Grundplatte 600. Diese Langlöcher dienen der flexiblen Befestigung an der Bodenplatte.

Ein Achsialspiel ist über Passscheiben zwischen den Wellenböcken 616, 618 einstellbar. Die Hebel sind vorzugsweise derart ausgeführt, dass in Vertikalrichtung 128 eine Bewegung zwischen -75mm und +75mm, d.h. ein entsprechender Radhub, simulierbar ist.

Die genannten Bauteile können in unterschiedlicher Form und Länge gefertigt sein. Ein Austausch zur Adaption oder Anpassung an die Kinematik des jeweils simulierten Fahrwerks ist somit einfach möglich. Die Bauteile sind beispielsweise aus Metall, insbesondere Aluminium oder einer Aluminium Legierung gefertigt. Dies reduziert das Gewicht. Bei den verwendeten Materialien ist darauf geachtet, dass bewegte Teile möglichst leicht sind. Da die hierbei übertragenen Kräfte nicht allzu hoch sind empfiehlt es sich hier eine günstige Aluminium Legierung zu verwenden, wie Beispielsweise EN AW 5754 (AIMg3). Für die bewegten Teile welche höhere Kräfte aushalten müssen oder nicht so großzügig dimensioniert sind wie z.B. ein unteres äußeres Ersatzquerlenkerteil welches die Hubbewegung überträgt, wird beispielsweise eine festere Aluminium Legierung wie EN AW 5083 (AIMg4,5Mn) verwendet. Bei den feststehenden Bauteilen wird ebenfalls aus Gründen des Gesamtgewichts eine Aluminiumlegierung, beispielsweise EN AW 5754 (AIMg3), verwendet.

## Patentansprüche

1. Lenkungsprüfstand (100) zur Aufnahme einer sich in einer Querrichtung (126) erstreckenden Lenkgetriebespurstange (102) einer zu prüfenden Lenkung, mit einer ersten Grundplatte (400), die sich in einer Längsrichtung (130) und in der Querrichtung (126) erstreckt, und einer zweiten Grundplatte (500), die sich in einer Längsrichtung (130) und in der Querrichtung (126) erstreckt, einem ersten Ersatzquerlenker (108) und einem zweiten Ersatzquerlenker (108), wobei der erste Ersatzquerlenker (108) an einem ersten Ende des ersten Ersatzquerlenkers (108) mittels wenigstens eines Befestigungselements (404, 406, 502, 504) an der ersten Grundplatte (400) und der zweite Ersatzquerlenker (108) an einem ersten Ende des zweiten Ersatzquerlenkers (108) mittels wenigstens eines Befestigungselements (404, 406, 502, 504) an der zweiten Grundplatte (500) um eine jeweiligeerste Längsachse drehbar verbunden ist, wobei sich die jeweilige erste Längsachse in der Längsrichtung (130) erstreckt, einen Ersatzradträger (104) zur Verbindung des Lenkungsprüfstands (100) mit der Lenkgetriebespurstange (102) der zu prüfenden Lenkung, wobei der Ersatzradträger (104) an einem ersten Ende des Ersatzradträgers (104) mittels wenigstens eines Anschlussteils (317, 318) mit einem zweiten Ende des ersten Ersatzquerlenkers (108) und an einem zweiten Ende des Ersatzradträgers (104) mittels wenigstens eines Anschlussteils (317, 318) mit einem zweiten Ende des zweiten Ersatzquerlenkers (108) um eine jeweilige zweite Längsachse drehbar verbunden ist, wobei sich die jeweilige zweite Längsachse in der Längsrichtung (130) erstreckt, wobei ein Antrieb (118) über wenigstens einen Umlenkhebel (122) eine Kraft erzeugt, die auf den Ersatzradträger (104) in einer Vertikalrichtung (128) einwirkt, wobei die Vertikalrichtung (128) zur Längsrichtung (130) und zur Querrichtung (126) senkrecht ist, wobei der erste Ersatzquerlenker (108) als erster Doppelquerlenker und der zweite Ersatzquerlenker (108) als zweiter Doppelquerlenker ausgebildet ist, wobei sich die erste Grundplatte (400) in der Querrichtung (126) von einer ersten Längskante zu einer zweiten Längskante erstreckt, wobei die erste Grundplatte (400) und die zweite Grundplatte (500) voneinander in der Vertikalrichtung (128) beabstandet sind, wobei der erste Doppelquerlenker an zwei ersten Anschlussteilen an der ersten Grundplatte (400) angeordnet ist und die erste Grundplatte (400) an der ersten Längskante in der Querrichtung (126) überragt, wobei sich die zweite Grundplatte (500) in der Querrichtung (126) von einer dritten Längskante zu einer vierten Längskante erstreckt, wobei der zweite Doppelquerlenker an zwei zweiten Anschlussteilen an der zweiten Grundplatte (500) angeordnet ist und die zweite Grundplatte (500) an der dritten Längskante in der Querrichtung (126) überragt.

2. Lenkungsprüfstand (100) nach Anspruch 1, **dadurch gekennzeichnet, dass** der erste Ersatzquerlenker (108) und der zweite Ersatzquerlenker (108) je wenigstens einen Schenkel umfasst, der sich zwischen zwei Enden des Ersatzquerlenkers (108) erstreckt, wobei der Schenkel einen sich zwischen den zwei Enden erstreckenden Gewindestangenabschnitt und eine sich zwischen den zwei Enden erstreckende Aufnahme für den Gewindestangenabschnitt umfasst, wobei eine Länge des wenigstens einen Schenkels durch Einbringen zumindest eines Teils des Gewindestangenabschnitts in die Aufnahme einstellbar ist.

3. Lenkungsprüfstand (100) nach einem der vorherigen Ansprüche, **dadurch gekennzeichnet, dass** die erste Grundplatte (400) eine Vielzahl von Lochabschnitten zur wahlweisen Befestigung wenigstens eines Befestigungselements (404, 406) an der ersten Grundplatte (400) umfasst.

4. Lenkungsprüfstand (100) nach einem der vorherigen Ansprüche, **dadurch gekennzeichnet, dass** der Ersatzradträger (104) eine erste Schiene (302) umfasst, die sich zwischen zwei Enden des Ersatzradträgers (104) in der Längsrichtung (130) erstreckt, mit wenigstens einem zweiten Langloch (308, 310), das sich in der Längsrichtung (130) erstreckt, und eine zweite Schiene (304), die sich zwischen den zwei Enden des Ersatzradträgers (104) in der Längsrichtung (130) erstreckt, mit wenigstens einem dritten Langloch (312, 314), das sich in der Längsrichtung (130) erstreckt, und wobei die erste Schiene (302) und die zweite Schiene (304) mit einem zweiten Befestigungsmittel (316), das durch das wenigsten eine zweiten Langloch (308, 310) und durch das wenigsten eine dritte Langloch (312, 314) führbar ist, in einer in der Längsrichtung (130) einstellbarer Länge verbunden sind.

5. Lenkungsprüfstand (100) nach Anspruch 4, **dadurch gekennzeichnet, dass** der Ersatzradträger (104) eine dritte Schiene (306) umfasst, die sich in der Querrichtung (126), senkrecht zur Längsrichtung (130) erstreckt, mit wenigstens einem vierten Langloch, das sich in der Querrichtung (126) erstreckt, wobei die dritte Schiene (306) ein drittes Anschlussteil (320) aufweist, zur Verbindung des Lenkungsprüfstands (100) mit der Lenkgetriebespurstange (102), wobei die zweite Schiene (304) und die dritte Schiene (302) mit einem dritten. Befestigungsmittel (316), das durch das wenigsten eine dritte Langloch (312, 314) und durch das wenigsten eine vierte Langloch führbar ist, verbunden sind, und wobei ein Abstand zwischen drittem Anschlussteil (320) und zweiter Schiene (304) in der Querrichtung (126) einstellbar ist.

6. Lenkungsprüfstand (100) nach einem der vorherigen Ansprüche, **gekennzeichnet durch** ein Steuergerät zur Ansteuerung des wenigstens einen Antriebs (118, 120), die ausgebildet ist eine Ersatzkinematik für eine Lenkgetriebespurstange (102) in Querrichtung (126) und in Vertikalrichtung (128) vorzugeben.

## Claims

1. Steering test bench (100) for receiving a steering gear track rod (102) of a steering system to be tested, which extends in a transverse direction (126), comprising a first base plate (400) extending in a longitudinal direction (130) and in the transverse direction (126), and a second base plate (500) extending in a longitudinal direction (130) and in the transverse direction (126), a first substitute wishbone (108) and a second substitute wishbone (108), wherein the first substitute wishbone (108) is connected to a first end of the first substitute wishbone (108) by means of at least one fastening element (404, 406, 502, 504) at the first base plate (400) and the second substitute wishbone (108) at a first end of the second substitute wishbone (108) by means of at least one fastening element (404, 406, 502, 504) to the second base plate (500) so as to be rotatable about a respective first longitudinal axis, wherein the respective first longitudinal axis extends in the longitudinal direction (130), a spare wheel carrier (104) for connecting the steering test bench (100) to the steering gear track rod (102) of the steering system to be tested, wherein the spare wheel carrier (104) is connected at a first end of the spare wheel carrier (104) by means of at least one connecting part (317, 318) to a second end of the first substitute wishbone (108) by means of at least one connecting part (317, 318) and at a second end of the spare wheel carrier (104) by means of at least one connecting part (317, 318) with a second end of the second substitute wishbone (108) so as to be rotatable about a respective second longitudinal axis, wherein the respective second longitudinal axis extends in the longitudinal direction (130), wherein a drive (118) generates a force via at least one deflection lever (122) which acts on the spare wheel carrier (104) in a vertical direction (128), wherein the vertical direction (128) is perpendicular to the longitudinal direction (130) and to the transverse direction (126), wherein the first substitute wishbone (108) is designed as a first double wishbone and the second substitute wishbone (108) is designed as a second double wishbone, wherein the first base plate (400) extends in the transverse direction (126) from a first longitudinal edge to a second longitudinal edge, wherein the first base plate (400) and the second base plate (500) are spaced apart from each other in the vertical direction (128), wherein the first double wishbone is arranged on two first connecting parts on the first base plate (400) and the first base plate (400) protruding at the first longitudinal edge in the transverse direction (126), wherein the second base plate (500) extends in the transverse direction (126) from a third longitudinal edge to a fourth longitudinal edge, wherein the second double wishbone is arranged on two second connecting parts on the second base plate (500) and the second base plate (500) protrudes beyond the third longitudinal edge in the transverse direction (126).

2. Steering test bench (100) according to claim 1, **characterized in that** the first substitute wishbone (108) and the second substitute wishbone (108) each comprise at least one leg extending between two ends of the substitute wishbone (108), wherein the leg comprises a threaded rod section extending between the two ends and a receptacle for the threaded rod section extending between the two ends, wherein a length of the at least one leg can be adjusted by inserting at least a part of the threaded rod section into the receptacle.

3. Steering test bench (100) according to one of the preceding claims, **characterized in that** the first base plate (400) comprises a plurality of hole sections for selectively fastening at least one fastening element (404, 406) to the first base plate (400).

4. Steering test bench (100) according to one of the previous claims, **characterized in that** the spare wheel carrier (104) comprises a first rail (302) extending between two ends of the spare wheel carrier (104) in the longitudinal direction (130), with at least one second elongated hole (308, 310) extending in the longitudinal direction (130), and a second rail (304) extending between the two ends of the spare wheel carrier (104) in the longitudinal direction (130), with at least one third elongated hole (312, 314) extending in the longitudinal direction (130), and wherein the first rail (302) and the second rail (304) are connected by a second fastening means (316) which can be guided through the at least one second elongated hole (308, 310) and through at least one third elongated hole (312, 314) in a length that can be adjusted in the longitudinal direction (130).

5. Steering test bench (100) according to claim 4, **characterized in that** the spare wheel carrier (104) comprises a third rail (306) extending in the transverse direction (126) perpendicular to the longitudinal direction (130), wherein at least one fourth elongated hole extends in the transverse direction (126), the third rail (306) having a third connecting part (320) for connecting the steering test bench (100) to the steering gear track rod (102), wherein the second rail (304) and the third rail (302) are connected to a third fastening means (316) that can be guided through at least one third elongated hole (312, 314) and through at least one fourth elongated hole, and wherein a distance between the third connecting part (320) and the second rail (304) that can be adjusted in the transverse direction (126).

6. Steering test bench (100) according to one of the preceding claims, **characterized by** a control device for controlling the at least one drive (118, 120), which is designed to specify a substitute kinematics for a steering gear track rod (102) in the transverse direction (126) and in the vertical direction (128).

## Revendications

1. Banc de test de direction (100) pour la réception d'un tirant de mécanisme de direction (102) d'une direction à tester, s'étendant dans une direction transversale (126), comportant une première
plaque de base (400), qui s'étend dans une direction longitudinale (130) et dans la direction transversale (126), et une seconde
plaque de base (500), qui s'étend dans une direction longitudinale (130) et dans la direction transversale (126), un premier bras oscillant de rechange (108) et un second bras oscillant de rechange
(108), dans lequel le premier bras oscillant de rechange (108) est relié de manière à pouvoir tourner au niveau d'une première extrémité du premier bras oscillant de rechange (108) par le biais d'au moins un élément de fixation (404, 406, 502, 504) à la première plaque de base (400) et le second bras oscillant de rechange (108) au niveau d'une première extrémité du second bras oscillant de rechange (108) par le biais d'au moins un élément de fixation (404, 406, 502, 504) à la seconde plaque de base (500) autour d'un premier axe longitudinal respectif, dans lequel le premier axe longitudinal respectif s'étend dans la direction longitudinale (130), un support de roue de rechange (104) pour la liaison du
banc de test de direction (100) avec le tirant de mécanisme de direction (102) de la direction à tester, dans lequel le support de roue de rechange (104) est relié de manière à pouvoir tourner au niveau d'une première extrémité du support de roue de rechange (104) par le biais d'au moins une partie de liaison (317, 318) à une seconde extrémité du premier bras oscillant de rechange (108) et au niveau d'une seconde extrémité du support de roue de rechange (104) par le biais d'au moins une partie de liaison (317, 318) à une seconde extrémité du second bras oscillant de rechange (108) autour d'un second axe longitudinal respectif, dans lequel le second axe longitudinal respectif s'étend dans la direction longitudinale (130), dans lequel un entraînement (118) produit une force par l'intermédiaire d'au moins une manette de renvoi (122), qui agit sur le support de roue de rechange (104) dans une direction verticale (128),
dans lequel la direction verticale (128) est perpendiculaire à la direction longitudinale (130) et à la direction transversale (126), dans lequel le premier bras oscillant de rechange (108) est réalisé sous la forme d'un premier double bras oscillant et le second bras oscillant de rechange (108) est réalisé sous la forme de second double bras oscillant, dans lequel la première plaque de base (400) s'étend dans la direction transversale (126) d'une première arête longitudinale à une deuxième arête
longitudinale, dans lequel la première plaque de base (400) et la seconde plaque de base (500) sont espacées entre elles dans la direction verticale (128), dans lequel le premier double bras oscillant est agencé sur deux premières parties de liaison sur la première plaque de base (400) et la première plaque de base (400) dépasse au niveau de la première arête longitudinale dans la direction transversale (126), dans lequel la seconde plaque de base (500) s'étend dans la direction transversale (126) d'une troisième arête longitudinale à une quatrième arête longitudinale, dans lequel le second double bras oscillant est agencé sur deux secondes parties de liaison sur la seconde plaque de base (500) et la seconde plaque de base (500) dépasse au niveau de la troisième arête longitudinale dans la direction transversale (126).

2. Banc de test de direction (100) selon la revendication 1, **caractérisé en ce que** le premier bras oscillant de rechange (108) et le second bras oscillant de rechange (108) comprennent chacun au moins une branche, qui s'étend entre deux extrémités du second bras oscillant de rechange (108), dans lequel la branche comprend une section de tige filetée s'étendant entre les deux extrémités et un logement s'étendant entre les deux extrémités pour la section de tige filetée, dans lequel une longueur de l'au moins une branche peut être réglée par insertion d'au moins une partie de la section de tige filetée dans le logement.

3. Banc de test de direction (100) selon l'une des revendications précédentes, **caractérisé en ce que** la première plaque de base (400) comprend une pluralité de sections à trou pour la fixation sélective d'au moins un
élément de fixation (404, 406) sur la première plaque de base (400).

4. Banc de test de direction (100) selon l'une des revendications précédentes, **caractérisé en ce que** le
support de roue de rechange (104) comprend un premier rail (302), qui s'étend entre deux extrémités du support de roue de rechange (104) dans la direction longitudinale (130), comportant au moins un deuxième trou long (308) 310), qui s'étend dans la direction longitudinale (130), et un deuxième rail (304), qui s'étend entre les deux extrémités du support de roue de rechange (104) dans la direction longitudinale (130), comportant au moins un troisième trou long (312, 314), qui s'étend dans la direction longitudinale (130), et dans lequel le premier rail (302) et le deuxième rail (304) sont reliés avec un second moyen de fixation (316), qui peut être guidé à travers l'au moins un deuxième trou long (308, 310) et à travers l'au moins un troisième trou long (312, 314), dans une longueur réglable dans la direction longitudinale (130).

5. Banc de test de direction (100) selon la revendication 4, **caractérisé en ce que** le support de roue de rechange (104) comprend un troisième rail (306) qui s'étend dans la direction transversale (126) perpendiculairement à la direction longitudinale (130), comportant au moins un quatrième trou long, qui s'étend dans la direction transversale (126), dans lequel le troisième rail (306) présente une troisième partie de liaison (320), pour
la liaison du banc de test de direction (100) au tirant de mécanisme de direction (102), dans lequel le deuxième rail (304) et le troisième rail (302) sont reliés avec un troisième
moyen de fixation (316), qui peut être guidé à travers l'au moins un troisième trou long (312, 314) et à travers l'au moins un quatrième trou long, et dans lequel une distance entre la troisième partie de liaison (320) et le deuxième rail (304) est réglable dans la direction transversale (126).

6. Bac de test de direction (100) selon l'une des revendications précédentes, **caractérisé par** un appareil de commande permettant de commander l'au moins un entraînement (118, 120), qui est réalisé pour assurer une cinématique de rechange pour un
tirant de mécanisme de direction (102) dans la direction transversale (126) et dans la direction verticale (128).
